# EUROPEAN PATENT APPLICATION

(11) **EP 4 752 653 A1**
(43) Date of publication of application: **03.06.2026**
(21) Application number: 23950258.6
(22) Date of filing: 31.08.2023
(51) Int. Cl.: G05B 19/401

(54) **STATE PREDICTION METHOD AND APPARATUS FOR COMPUTER NUMERICAL CONTROL MACHINE TOOL, ELECTRONIC DEVICE, AND MEDIUM**

(71) Applicant: Siemens Aktiengesellschaft, 80333 München (DE)
(72) Inventor: ZHANG, Bin, Beijing 100102 (CN); ROUX, Armin, 91056 Erlangen (DE)
(74) Representative: Isarpatent
(86) International application number: PCT/CN2023/116363
(87) International publication number: WO 2025/043679

(57) **Abstract**

A state prediction method and apparatus for a computer numerical control (CNC) machine tool, an electronic device, and a medium are provided. The state prediction method for a CNC machine tool includes: obtaining a first vibration signal of a CNC machine tool in an operation process (101); determining a life cycle stage of the operation process in a full life cycle of the CNC machine tool based on the first vibration signal (102); and inputting the first vibration signal into a trained state prediction model corresponding to the life cycle stage, so that the state prediction model outputs a predicted state of the CNC machine tool (103). A specific life cycle stage is determined based on a mean square value feature (13) of a vibration signal, and then state prediction of the CNC machine tool is performed through the state prediction model corresponding to the life cycle stage. Differences in machine tool states in different life cycle stages are fully considered, thereby improving accuracy of state prediction. Moreover, the state prediction model is updated based on an incentive mechanism, thereby improving precision of the state prediction model.

## Description

### TECHNICAL FIELD

The present invention relates to the technical field of computer numerical control (CNC) machine tools, and in particular, to a state prediction method and apparatus for a CNC machine tool, an electronic device, and a medium.

### BACKGROUND

A computer numerical control (CNC) machine tool is short for a computer numerical control machine tool, and is an automatic machine tool installed with a program control system. The control system can logically process a program specified by control code or another symbol instruction, decode the program, represent the program with a coded digit, and input the program into a CNC apparatus through an information carrier. After calculation processing, the CNC apparatus sends various control signals, to control an action of a machine tool, so as to automatically machine a part based on a required shape and size of a drawing.

It is well known that the CNC machine tool is used as an important device in various production fields, and safe and stable operation of the CNC machine tool needs to be ensured. Performing state prediction on the CNC machine tool can perform warning before a fault occurs, so that personnel can take timely action, thereby reducing losses.

### SUMMARY

Implementations of the present invention provide a state prediction method and apparatus for a computer numerical control (CNC) machine tool, an electronic device, and a medium.

A state prediction method for a CNC machine tool includes:
obtaining a first vibration signal of a CNC machine tool in an operation process;
determining a life cycle stage of the operation process in a full life cycle of the CNC machine tool based on the first vibration signal; and
inputting the first vibration signal into a trained state prediction model corresponding to the life cycle stage, so that the state prediction model outputs a predicted state of the CNC machine tool.

Therefore, in the implementation of the present invention, a life cycle stage to which the operation process belongs is predetermined, and then state prediction of the CNC machine tool is performed through the state prediction model corresponding to the life cycle stage. Differences in machine tool states in different life cycle stages are fully considered, thereby improving accuracy of state prediction is improved.

In an implementation, the determining a life cycle stage of the operation process in a full life cycle of the CNC machine tool based on the first vibration signal includes:
inputting the first vibration signal into a trained life cycle stage classification model, so that the life cycle stage classification model outputs the life cycle stage.

Therefore, the life cycle stage may be determined based on artificial intelligence, and the amount of calculation is reduced.

In an implementation, a training process of the life cycle stage classification model includes:
obtaining a second vibration signal from a test CNC machine tool of a same model as the CNC machine tool in the full life cycle;
determining a time-domain feature of the second vibration signal;
determining a normal period, a degradation period, and a failure period in the full life cycle based on the time-domain feature of the second vibration signal;
attaching a first label to the time-domain feature in the normal period, attaching a second label to the time-domain feature in the degradation period, and attaching a third label to the time-domain feature in the failure period; and
training a neural network model as the life cycle stage classification model based on the first label, the second label, and the third label.

It may be learned that a method for training a life cycle stage classification model is provided, which facilitates highly efficient determining of the life cycle stage.

In an implementation, the time-domain feature includes a root-mean-square value; and
the determining a normal period, a degradation period, and a failure period in the full life cycle based on the time-domain feature of the second vibration signal includes:
determining, as the normal period, a time segment in which the root-mean-square value is less than or equal to a first predetermined threshold;
determining, as the degradation period, a time segment in which the root-mean-square value is greater than the first predetermined threshold and less than or equal to a second predetermined threshold; and
determining, as the failure period, a time segment in which the root-mean-square value is greater than the second predetermined threshold, where
the second predetermined threshold is greater than the first predetermined threshold.

It may be learned that accurate training of the life cycle stage classification model is implemented through the mean square value feature.

In an implementation, the determining a life cycle stage of the operation process in a full life cycle of the CNC machine tool based on the first vibration signal includes:
determining a root-mean-square value of the first vibration signal; and
determining the life cycle stage of the operation process in the full life cycle of the CNC machine tool based on the root-mean-square value of the first vibration signal; determining that the life cycle stage is a normal period when the root-mean-square value is less than or equal to a first predetermined threshold; determining that the life cycle stage is a degradation period when the root-mean-square value is greater than a first predetermined threshold and less than or equal to a second predetermined threshold; and determining that the life cycle stage is a failure period when the root-mean-square value is greater than a time segment of the second predetermined threshold, where the second predetermined threshold is greater than the first predetermined threshold.

Therefore, the mean square value may be directly calculated to quickly determine the life cycle stage.

In an implementation, the method includes a training process of the state prediction model corresponding to the life cycle stage, where the training process includes:
obtaining a third vibration signal of a test CNC machine tool of a same model as the CNC machine tool in the life cycle stage, and a subsequent state of the machine tool after the third vibration signal;
inputting the third vibration signal and the subsequent state into a bidirectional long short-term memory (BiLSTM) model, so that the BiLSTM model successively performs steps of: determining a time-domain feature of the third vibration signal; obtaining a forward hidden state through a recurrent temporal layer based on the time-domain feature of the third vibration signal; obtaining a backward hidden state through a reverse recurrent temporal layer based on a time-domain feature of the third vibration signal; concatenating the forward hidden state and the backward hidden state, to obtain a hidden layer state; determining the predicted state of the CNC machine tool based on the hidden layer state; determining a loss function value based on a difference between the predicted state and the subsequent state; and adjusting a model parameter of the BiLSTM model, so that the loss function value is less than a predetermined threshold; and
determining the adjusted BiLSTM model as the trained state prediction model corresponding to the life cycle stage.

Considering a large volume of data is required by long-term monitoring of the machine tool, and a hidden layer has a weak capability of memorizing historical state information of a relatively large time span and a prediction effect is reduced when time series data is excessively long. The implementation of the present invention provides an improved BiLSTM model to predict state data, which may improve a prediction effect of the model in a large time span.

In an implementation, the method includes:
recording a real state corresponding to the predicted state after the state prediction model outputs the predicted state of the CNC machine tool;
determining a difference between the predicted state and the real state; and
updating the trained state prediction model based on the difference.

It may be learned that the state prediction model is further adaptively updated through an incentive mechanism.

A state prediction apparatus for a CNC machine tool includes:
an obtaining module, configured to obtain a first vibration signal of a CNC machine tool in an operation process;
a determining module, configured to determine a life cycle stage of the operation process in a full life cycle of the CNC machine tool based on the first vibration signal; and
an input module, configured to input the first vibration signal into a trained state prediction model corresponding to the life cycle stage, so that the state prediction model outputs a predicted state of the CNC machine tool.

Therefore, in the implementation of the present invention, a life cycle stage to which the operation process belongs is predetermined, and then state prediction of the CNC machine tool is performed through the state prediction model corresponding to the life cycle stage. Differences in machine tool states in different life cycle stages are fully considered, thereby improving accuracy of state prediction is improved.

In an implementation, the determining module is configured to input the first vibration signal into a trained life cycle stage classification model, so that the life cycle stage classification model outputs the life cycle stage; and a training process of the life cycle stage classification model includes: obtaining a second vibration signal from a test CNC machine tool of a same model as the CNC machine tool in the full life cycle; determining a time-domain feature of the second vibration signal; determining a normal period, a degradation period, and a failure period in the full life cycle based on the time-domain feature of the second vibration signal; attaching a first label to the time-domain feature in the normal period, attaching a second label to the time-domain feature in the degradation period, and attaching a third label to the time-domain feature in the failure period; and training a neural network model as the life cycle stage classification model based on the first label, the second label, and the third label.

Therefore, the life cycle stage may be determined based on artificial intelligence, and the amount of calculation is reduced. A method for training a life cycle stage classification model is further provided, which facilitates highly efficient determining of the life cycle stage.

In an implementation, the time-domain feature is a root-mean-square value. The determining module is configured to: determine, as the normal period, a time segment in which the root-mean-square value is less than or equal to a first predetermined threshold; determine, as the degradation period, a time segment in which the root-mean-square value is greater than the first predetermined threshold and less than or equal to a second predetermined threshold; and determine, as the failure period, a time segment in which the root-mean-square value is greater than the second predetermined threshold, where the second predetermined threshold is greater than the first predetermined threshold.

It may be learned that accurate training of the life cycle stage classification model is implemented through the mean square value feature.

In an implementation, the apparatus includes a training module, configured to perform a training process corresponding to the state prediction model of the life cycle stage, where the training process includes: obtaining a third vibration signal of a test CNC machine tool of a same model as the CNC machine tool in the life cycle stage and a subsequent state of the machine tool after the third vibration signal; and inputting the third vibration signal and the subsequent state into a BiLSTM model, so that the BiLSTM model successively performs steps of: determining a time-domain feature of the third vibration signal; obtaining a forward hidden state through a recurrent temporal layer based on the time-domain feature of the third vibration signal; obtaining a backward hidden state through a reverse recurrent temporal layer based on a time-domain feature of the third vibration signal; concatenating the forward hidden state and the backward hidden state, to obtain a hidden layer state; determining the predicted state of the CNC machine tool based on the hidden layer state; determining a loss function value based on a difference between the predicted state and the subsequent state; adjusting a model parameter of the BiLSTM model, so that the loss function value is less than a predetermined threshold; and determining the adjusted BiLSTM model as the trained state prediction model corresponding to the life cycle stage.

Considering a large volume of data is required by long-term monitoring of the machine tool, and a hidden layer has a weak capability of memorizing historical state information of a relatively large time span and a prediction effect is reduced when time series data is excessively long. The implementation of the present invention provides an improved BiLSTM model to predict state data, which may improve a prediction effect of the model in a large time span.

An electronic device includes:
a processor; and
a memory, configured to store executable instructions of the processor, where
the processor is configured to read the executable instructions from the memory, and execute the executable instructions to implement the state prediction method for a CNC machine tool according to any one of the above.

A computer-readable storage medium, storing computer instructions, where the computer instructions, when executed by a processor, implement the state prediction method for a CNC machine tool according to any one of the above.

A computer program product, including a computer program, where the computer program, when executed by a processor, implements the state prediction method for a CNC machine tool according to any one of the above.

### BRIEF DESCRIPTION OF THE DRAWINGS

Preferred embodiments of the present invention are described in detail below with reference to the drawings, so as to make a person of ordinary skill in the art be more aware of the above and other features and advantages of the present invention. In the figures:
FIG. 1 is an exemplary flowchart of a state prediction method for a computer numerical control (CNC) machine tool according to an implementation of the present invention;
FIG. 2 is an exemplary schematic diagram of determining a life cycle stage of a current operation process according to an implementation of the present invention;
FIG. 3 is an exemplary structural diagram of a bidirectional long short-term memory (BiLSTM) model according to an implementation of the present invention;
FIG. 4 is a schematic diagram of updating a trained state prediction model according to an implementation of the present invention;
FIG. 5 is a schematic diagram of an overall process of state prediction and model maintenance of a CNC machine tool according to an implementation of the present invention;
FIG. 6 is an exemplary structural diagram of a state prediction apparatus for a CNC machine tool according to an implementation of the present invention; and
FIG. 7 is a structural diagram of an electronic device according to an implementation of the present invention.

Reference numerals are as follows.

| Reference numerals | Meanings |
|---|---|
| 101-103 | Step |
| 10 | Spindle |
| 11 | Horizontal vibration signal |
| 12 | Vertical vibration signal |
| 13 | Root-mean-square value |
| 21 | Normal period |
| 22 | Degradation period |
| 23 | Failure period |
| 30 | Training data |
| 31 | Label |
| 40 | State prediction model |
| 41 | Input layer |
| 42 | Output layer |
| 50 | Prediction process |
| 60 | Incentive processing |
| 70 | Signal processing |
| 71 | State prediction processing |
| 72 | Incentive determining processing |
| 73 | Model evaluation processing |
| 74 | Adaptive optimization processing |
| 600 | State prediction apparatus |
| 601 | Obtaining module |
| 602 | Determining module |
| 603 | Input module |
| 604 | Training module |
| 700 | Electronic device |
| 701 | Processor |
| 702 | Memory |

### DETAILED DESCRIPTION

To make the purposes, technical solutions, and advantages of the present invention clearer, the following embodiments are provided to describe the present invention in further detail.

For concise and intuitive descriptions, solutions of the present invention are stated below by using several representative implementations. A large amount of details in the implementations are merely used for helping understand the solutions of the present invention. However, obviously, implementation of the technical solutions of the present invention may not be limited to these details. To avoid unnecessarily blurring the solutions of the present invention, some implementations are not described in detail, but only frames are provided. In the following, "include" means "include, but is not limited to", and "according to" means "at least according to, but not limited to only according to". Because of Chinese language habits, the following does not particularly specify the number of a component, which means that the component may be one or more, or may be understood as at least one.

In an implementation of the present invention, a health monitoring method and system for a computer numerical control (CNC) machine tool based on a multi-layer perceptual network are provided. For an evolution process in which a machine tool fault gradually worsens from an early weak feature until the machine tool fault becomes completely fail, a fault evolution law model is established based on operating data, to monitor a health state of the machine tool. Considering that the CNC machine tool does not have a linear process from operating normally to a fault, but has a degradation period, how to determine a starting point of degradation of the machine tool is always a difficult problem. The implementation of the present invention provides an initial degradation point detection method based on a root mean square feature, thereby implementing fault prediction for the machine tool in a degradation period.

In addition, considering a large volume of data is required by long-term monitoring of the machine tool, and a hidden layer has a weak capability of memorizing historical state information of a relatively large time span and a prediction effect is reduced when time series data is excessively long. The implementation of the present invention provides an improved bidirectional long short-term memory (BiLSTM) network to predict state data, which may improve a prediction effect of the model in a large time span. In addition, how to optimize a prediction model on such a basis is also an important problem in consideration of guiding operation and maintenance of the machine tool by using prediction data. An implementation of the present invention provides a fault evolution and health management system for the CNC machine tool, which combines predictive data with actual operation data to optimize a prediction model.

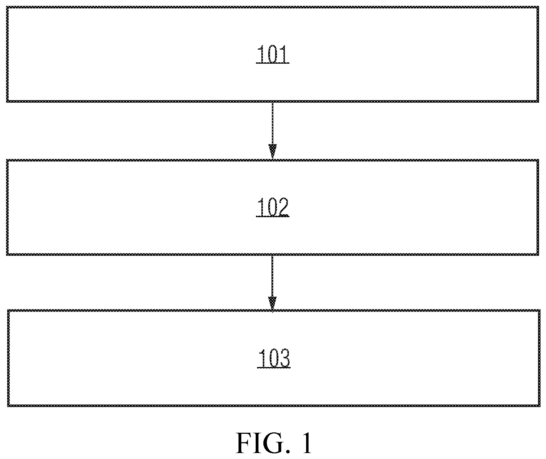

FIG. 1 is an exemplary flowchart of a state prediction method for a CNC machine tool according to an implementation of the present invention. As shown in FIG. 1, the method includes the following steps.

Step 101: Obtain a first vibration signal of a CNC machine tool in an operation process.

In this case, one or more vibration signals of one or more key components of the CNC machine tool in the operation process (preferably, a current operation process) may be measured by using a plurality of vibration sensors, which are used as the first vibration signals. Correspondingly,
the first vibration signal may be a signal of a single time point or a time series signal in a period of time that is measured from one or more key components. For example, the key component may include a spindle, a feed box, an apron, a tool holder, a tail holder, a light bar, a screw bar, a lathe bed, and the like.

Step 102: Determine a life cycle stage of the operation process in a full life cycle of the CNC machine tool based on the first vibration signal.

In an implementation, step 102 includes: inputting the first vibration signal into a trained life cycle stage classification model, so that the life cycle stage classification model outputs the life cycle stage. A training process of the life cycle stage classification model includes: obtaining a second vibration signal from a test CNC machine tool of a same model as the CNC machine tool in the full life cycle; determining a time-domain feature of the second vibration signal; determining a normal period, a degradation period, and a failure period in the full life cycle based on the time-domain feature of the second vibration signal; attaching a first label to the time-domain feature in the normal period, attaching a second label to the time-domain feature in the degradation period, and attaching a third label to the time-domain feature in the failure period; and training a neural network model as the life cycle stage classification model based on the first label, the second label, and the third label.

Therefore, the life cycle stage may be determined based on artificial intelligence, and the amount of calculation is reduced. In addition, a method for training a life cycle stage classification model is provided, which facilitates highly efficient determining of the life cycle stage.

In an implementation, the time-domain feature includes a root-mean-square value. The determining a normal period, a degradation period, and a failure period in the full life cycle based on the time-domain feature of the second vibration signal includes: determining, as the normal period, a time segment in which the root-mean-square value is less than or equal to a first predetermined threshold; determining, as the degradation period, a time segment in which the root-mean-square value is greater than the first predetermined threshold and less than or equal to a second predetermined threshold; and determining, as the failure period, a time segment in which the root-mean-square value is greater than the second predetermined threshold, where the second predetermined threshold is greater than the first predetermined threshold. It may be learned that accurate training of the life cycle stage classification model is implemented through the mean square value feature.

In an implementation, step 102 includes: determining a root-mean-square value of the first vibration signal; determining the life cycle stage of the operation process in the full life cycle of the CNC machine tool based on the root-mean-square value of the first vibration signal; determining that the life cycle stage is a normal period when the root-mean-square value is less than or equal to a first predetermined threshold; determining that the life cycle stage is a degradation period when the root-mean-square value is greater than a first predetermined threshold and less than or equal to a second predetermined threshold; and determining that the life cycle stage is a failure period when the root-mean-square value is greater than a time segment of the second predetermined threshold, where the second predetermined threshold is greater than the first predetermined threshold. Therefore, the mean square value may be directly calculated to quickly determine the life cycle stage.

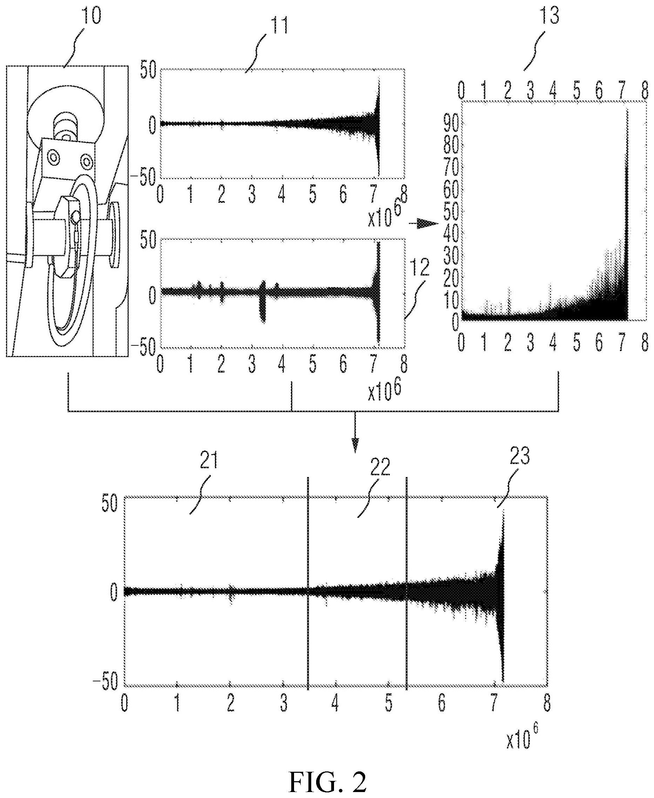

FIG. 2 is an exemplary schematic diagram of determining a life cycle stage of a current operation process according to an implementation of the present invention.

First, a horizontal vibration signal 11 and a vertical vibration signal 12 of a spindle in an operation process of a machine tool are acquired through a sensor. Then, the horizontal vibration signal 11 and the vertical vibration signal 12 are synthesized, and a root-mean-square value 13 (for example, an average root mean square) of the synthesized vibration signal is calculated. Next, the root-mean-square value 13 is respectively compared with a first predetermined threshold and a second predetermined threshold, to determine a life cycle stage to which the operation process of the machine tool belongs. When the root-mean-square value is less than or equal to the first predetermined threshold, it is determined that the operation process of the machine tool is a normal period. When the root-mean-square value is greater than the first predetermined threshold and less than or equal to the second predetermined threshold, it is determined that the operation process of the machine tool is a degradation period. When the root-mean-square value is greater than the second predetermined threshold, it is determined that the operation process of the machine tool is a failure period. The second predetermined threshold is greater than the first predetermined threshold.

In this case, the first predetermined threshold and the second predetermined threshold may be empirical values set by a user, or may be mechanism values calculated based on a mechanism model. In addition, the first predetermined threshold and the second predetermined threshold are both preferably adjustable.

An exemplary process of determining the life cycle stage of the current operation process is exemplarily described above. A person skilled in the art may realize that the description is merely exemplary and is not intended to limit the protection scope of the implementations of the present invention.

Step 103: Input the first vibration signal into a trained state prediction model corresponding to the life cycle stage, so that the state prediction model outputs a predicted state of the CNC machine tool.

It may be learned that in the implementation of the present invention, for each life cycle stage, a corresponding trained state prediction model exists. Therefore, a specific life cycle stage to which the operation process belongs is predetermined, and then state prediction of the CNC machine tool is performed through the state prediction model corresponding to the life cycle stage. Differences in machine tool states in different life cycle stages are fully considered, thereby improving accuracy of state prediction is improved.

In an implementation, the method includes a training process of the state prediction model corresponding to the life cycle stage, where the training process includes: obtaining a third vibration signal of a test CNC machine tool of a same model as the CNC machine tool in the life cycle stage and a subsequent state of the machine tool after the third vibration signal, where the subsequent state may be represented by the vibration signal at a predetermined time after the third vibration signal; and inputting the third vibration signal and the subsequent state into a BiLSTM model, so that the BiLSTM model successively performs steps of: determining a time-domain feature of the third vibration signal; obtaining a forward hidden state through a recurrent temporal layer based on the time-domain feature of the third vibration signal; obtaining a backward hidden state through a reverse recurrent temporal layer based on a time-domain feature of the third vibration signal; concatenating the forward hidden state and the backward hidden state, to obtain a hidden layer state; determining the predicted state of the CNC machine tool based on the hidden layer state; determining a loss function value based on a difference between the predicted state and the subsequent state; adjusting a model parameter of the BiLSTM model, so that the loss function value is less than a predetermined threshold; and determining the adjusted BiLSTM model as the trained state prediction model corresponding to the life cycle stage.

The time-domain feature of the third vibration signal includes at least one of the following: an average value, a variance, a root-mean-square-amplitude value, a root-mean-square value, a maximum value, a minimum value, a waveform index, a peak value index, an impulse index, an edge index, skewness, or kurtosis.

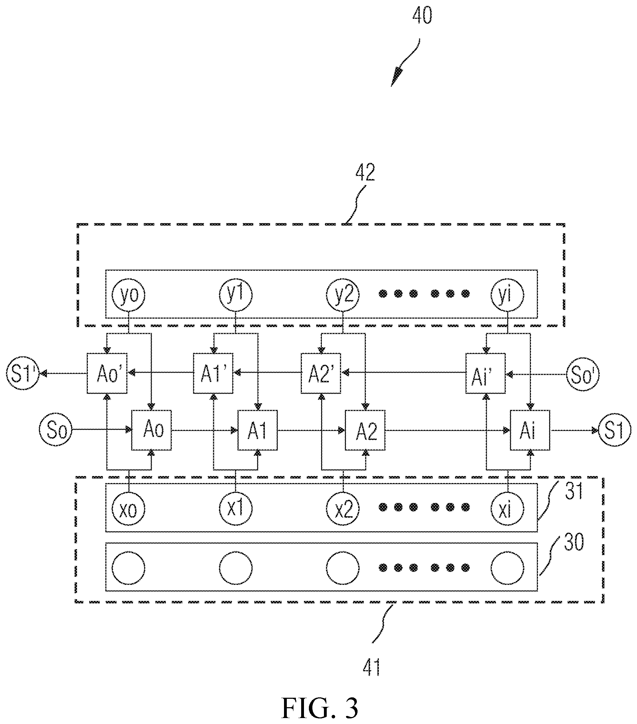

FIG. 3 is an exemplary structural diagram of a BiLSTM model according to an implementation of the present invention.

In FIG. 3, the BiLSTM model includes an input layer 41, an output layer 42, and a hidden layer between the input layer 41 and the output layer 42. The hidden layer of the BiLSTM is formed by combining two LSTMs. One of the two LSTMs processes an input sequence in a forward direction, and the other of the two LSTMs processes the input sequence in a reverse direction. After the processing are completed, outputs of the two LSTMs are concatenated. A final output result of the BiLSTM may be obtained only after calculation in all time steps is completed. In the input layer 41, training data 30 and a label 31 thereof are inputted. The training data 30 includes a plurality of vibration signals x1, x2, ..., xi based on a time sequence, which may be specifically a third vibration signal in a specific life cycle stage (the third vibration signal is usually a time series), and labels of x1, x2, ..., xi respectively correspond to machine tool states of x1, x2, ..., xi one by one after a same predetermined time (which may be represented by a vibration signal sequence after the predetermined time). After the training data 30 and the label thereof are inputted to the hidden layer, a predicted state of a machine tool after the predetermined time (which may also be represented by a predicted vibration signal sequence y1, y2, ..., yi after the predetermined time) is outputted through the output layer 42. Then, a loss function between the predicted state of the machine tool and the label 31 is calculated, and the BiLSTM model is inversely updated based on the loss function to complete training, to obtain the state prediction model corresponding to the specific life cycle stage.

In an implementation, the method includes: recording a real state corresponding to the predicted state after the state prediction model outputs the predicted state of the CNC machine tool; determining a difference between the predicted state and the real state; and updating the trained state prediction model based on the difference.

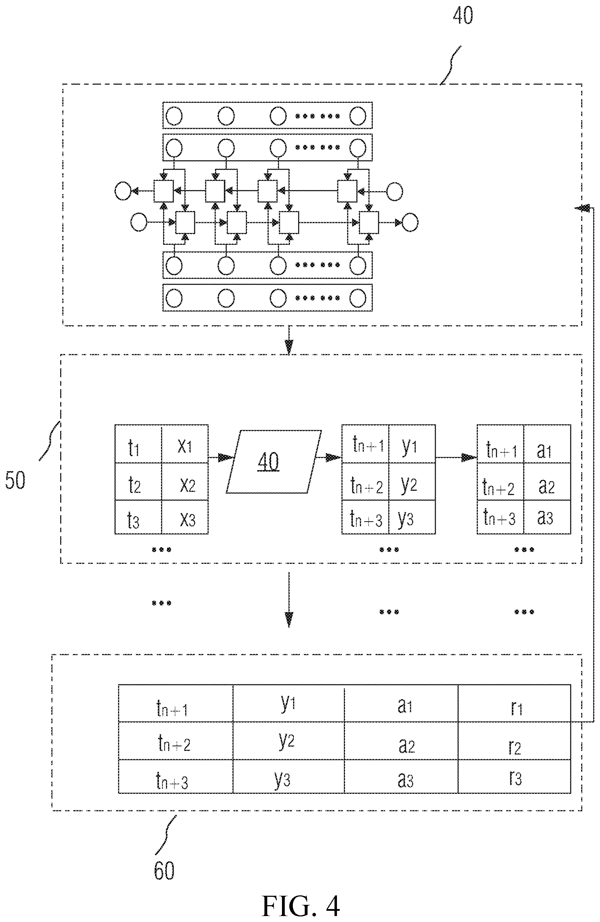

FIG. 4 is a schematic diagram of updating a trained state prediction model according to an implementation of the present invention.

In FIG. 4, it is assumed that a life cycle stage of a vibration signal between a time point t1 and a time point 13 is a normal period. In a prediction process 50, a vibration signal (x1-x3) between the time point t1 and the time point t3 is inputted to a trained state prediction model 40 corresponding to the normal period. The state prediction model 40 outputs predicted state (represented through vibration signals y1-y3) after a predetermined time n (that is, tn+1-tn+3). Then, a real state during an arrival time period tn+1-tn+3 is recorded (which is represented through vibration signals a1-a3). In an incentive processing 60, differences between the real states a1-a3 and the predicted states y1-y3 are calculated, to determine incentive values r1-r3. When the real state is closer to the predicted state, the incentive value is positive incentive. Otherwise, when the real state is less close to the predicted state, the incentive value is positive penalty. Next, the trained state prediction model 40 is updated through the incentive values r1-r3.

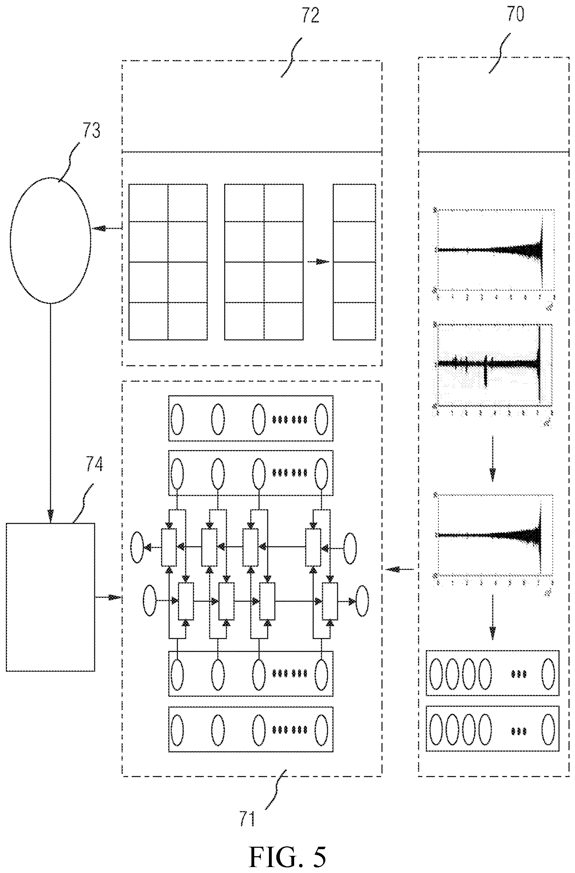

FIG. 5 is a schematic diagram of an overall process of state prediction and model maintenance of a CNC machine tool according to an implementation of the present invention.

As shown in FIG. 5, a signal processing 70 is first performed, to determine a root mean square of a vibration signal in a current operation process of the CNC machine tool. Next, in a state prediction processing 71, the vibration signal in the current operation process is inputted to a state prediction model corresponding to the life cycle stage determined based on the root mean square, to perform machine tool state prediction. Then, in an incentive determining processing 72, an incentive value is determined based on a difference between a predicted value of the state prediction model and a recorded real state. In a model evaluation processing 73, whether the state prediction model needs to be updated is evaluated. After it is determined that the state prediction model needs to be updated, in an adaptive optimization processing 74, the state prediction model is updated through the incentive value.

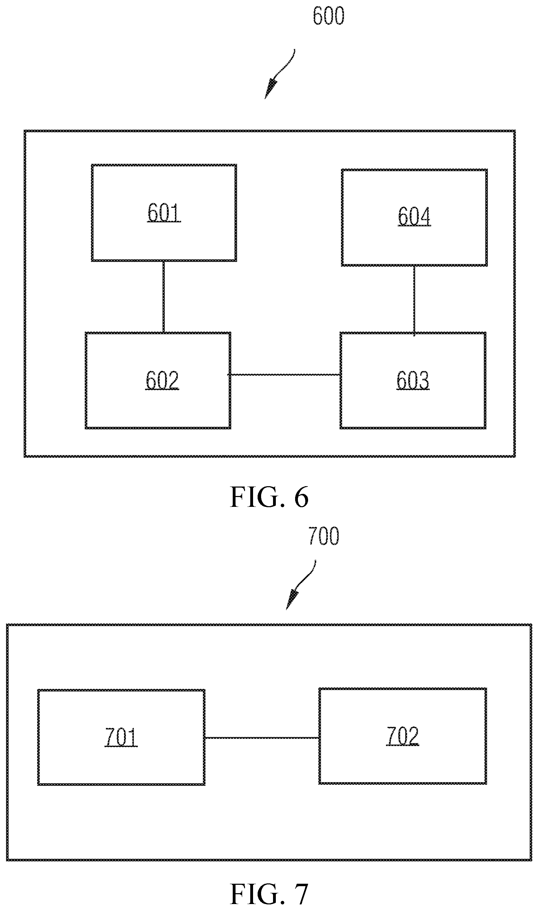

FIG. 6 is an exemplary structural diagram of a state prediction apparatus for a CNC machine tool according to an implementation of the present invention. A state prediction apparatus 600 for a CNC machine tool includes:
an obtaining module 601, configured to obtain a first vibration signal of a CNC machine tool in an operation process;
a determining module 602, configured to determine a life cycle stage of the operation process in a full life cycle of the CNC machine tool based on the first vibration signal; and
an input module 603, configured to input the first vibration signal into a trained state prediction model corresponding to the life cycle stage, so that the state prediction model outputs a predicted state of the CNC machine tool.

In an implementation, the determining module 602 is configured to input the first vibration signal into a trained life cycle stage classification model, so that the life cycle stage classification model outputs the life cycle stage; and a training process of the life cycle stage classification model includes: obtaining a second vibration signal from a test CNC machine tool of a same model as the CNC machine tool in the full life cycle; determining a time-domain feature of the second vibration signal; determining a normal period, a degradation period, and a failure period in the full life cycle based on the time-domain feature of the second vibration signal; attaching a first label to the time-domain feature in the normal period, attaching a second label to the time-domain feature in the degradation period, and attaching a third label to the time-domain feature in the failure period; and training a neural network model as the life cycle stage classification model based on the first label, the second label, and the third label.

In an implementation, the time-domain feature is a root-mean-square value. The determining module 602 is configured to: determine, as the normal period, a time segment in which the root-mean-square value is less than or equal to a first predetermined threshold; determine, as the degradation period, a time segment in which the root-mean-square value is greater than the first predetermined threshold and less than or equal to a second predetermined threshold; and determine, as the failure period, a time segment in which the root-mean-square value is greater than the second predetermined threshold, where the second predetermined threshold is greater than the first predetermined threshold.

In an implementation, the apparatus includes a training module 604, configured to perform a training process corresponding to the state prediction model of the life cycle stage, where the training process includes: obtaining a third vibration signal of a test CNC machine tool of a same model as the CNC machine tool in the life cycle stage and a subsequent state of the machine tool after the third vibration signal; and inputting the third vibration signal and the subsequent state into a BiLSTM model, so that the BiLSTM model successively performs steps of: determining a time-domain feature of the third vibration signal; obtaining a forward hidden state through a recurrent temporal layer based on the time-domain feature of the third vibration signal; obtaining a backward hidden state through a reverse recurrent temporal layer based on a time-domain feature of the third vibration signal; concatenating the forward hidden state and the backward hidden state, to obtain a hidden layer state; determining the predicted state of the CNC machine tool based on the hidden layer state; determining a loss function value based on a difference between the predicted state and the subsequent state; adjusting a model parameter of the BiLSTM model, so that the loss function value is less than a predetermined threshold; and determining the adjusted BiLSTM model as the trained state prediction model corresponding to the life cycle stage.

An implementation of the present invention further provides an electronic device having a processor-memory architecture. FIG. 7 is a structural diagram of an electronic device according to an implementation of the present invention. As shown in FIG. 7, an electronic device 700 includes a processor 701, a memory 702, and a computer program stored in the memory 702 and executable on the processor 701. The computer program, when executed by the processor 701, implements the state prediction method for a CNC machine tool according to any one of the above. The memory 702 may be specifically implemented as a plurality of storage media such as an electrically erasable programmable read-only memory (EEPROM), a flash memory, or a programmable read-only memory (PROM). The processor 701 may be implemented to include one or more central processing units (CPU) or one or more field-programmable gate arrays. The field-programmable gate array integrates one or more CPU cores. Specifically, the CPU or the central processing unit core may be implemented as the CPU, a micro-control unit (MCU), a digital signal processor (DSP), or the like.

It should be noted that not all steps and modules in the drawings of the procedures and the structures are necessary, and some steps or modules may be omitted based on an actual requirement. An execution order of the steps is not fixed and may be adjusted as required. Division of the modules is merely functional division for ease of description. During actual implementation, functions of one module may be implemented separately by a plurality of modules, and functions of the plurality of modules may be implemented by the same module. The modules may be located in the same device or in different devices.

Hardware modules in the implementations may be implemented in a mechanic manner or an electronic manner. For example, a hardware module may include specially designed permanent circuits or logic devices (for example, an application-specific processor such as a field programmable gate array (FPGA) or an application specific integrated circuit (ASIC)) to complete specific operations. The hardware module may further include temporarily configured programmable logic devices or circuits (for example, including a universal processor or other programmable processors) to perform specific operations. Whether the hardware module is specifically implemented in the mechanical manner, by using the application-specific permanent circuits, or by using the temporarily configured circuits (for example, configured by software) may be decided in consideration of costs and time.

The above is merely preferred implementations of the present invention, and is not intended to limit the protection scope of the present invention. Any modification, equivalent replacement, and improvement within the spirit and principle of the present invention shall fall within the protection scope of the present invention.

## Claims

1. A state prediction method for a computer numerical control (CNC) machine tool, comprising:
obtaining (101) a first vibration signal of a CNC machine tool in an operation process;
determining (102) a life cycle stage of the operation process in a full life cycle of the CNC machine tool based on the first vibration signal; and
inputting (103) the first vibration signal into a trained state prediction model corresponding to the life cycle stage, so that the state prediction model outputs a predicted state of the CNC machine tool.

2. The method according to claim 1, wherein the determining (102) a life cycle stage of the operation process in a full life cycle of the CNC machine tool based on the first vibration signal comprises:
inputting the first vibration signal into a trained life cycle stage classification model, so that the life cycle stage classification model outputs the life cycle stage.

3. The method according to claim 2, wherein a training process of the life cycle stage classification model comprises:
obtaining a second vibration signal from a test CNC machine tool of a same model as the CNC machine tool in the full life cycle;
determining a time-domain feature of the second vibration signal;
determining a normal period, a degradation period, and a failure period in the full life cycle based on the time-domain feature of the second vibration signal;
attaching a first label to the time-domain feature in the normal period, attaching a second label to the time-domain feature in the degradation period, and attaching a third label to the time-domain feature in the failure period; and
training a neural network model as the life cycle stage classification model based on the first label, the second label, and the third label.

4. The method according to claim 3, wherein the time-domain feature comprises a root-mean-square value; and
the determining a normal period, a degradation period, and a failure period in the full life cycle based on the time-domain feature of the second vibration signal comprises:
determining, as the normal period, a time segment in which the root-mean-square value is less than or equal to a first predetermined threshold;
determining, as the degradation period, a time segment in which the root-mean-square value is greater than the first predetermined threshold and less than or equal to a second predetermined threshold; and
determining, as the failure period, a time segment in which the root-mean-square value is greater than the second predetermined threshold, wherein
the second predetermined threshold is greater than the first predetermined threshold.

5. The method according to claim 1, wherein the determining (102) a life cycle stage of the operation process in a full life cycle of the CNC machine tool based on the first vibration signal comprises:
determining a root-mean-square value of the first vibration signal; and
determining the life cycle stage of the operation process in the full life cycle of the CNC machine tool based on the root-mean-square value of the first vibration signal; determining that the life cycle stage is a normal period when the root-mean-square value is less than or equal to a first predetermined threshold; determining that the life cycle stage is a degradation period when the root-mean-square value is greater than a first predetermined threshold and less than or equal to a second predetermined threshold; and determining that the life cycle stage is a failure period when the root-mean-square value is greater than a time segment of the second predetermined threshold, wherein the second predetermined threshold is greater than the first predetermined threshold.

6. The method according to claim 1, comprising a training process of the state prediction model corresponding to the life cycle stage, wherein the training process comprises:
obtaining a third vibration signal of a test CNC machine tool of a same model as the CNC machine tool in the life cycle stage, and a subsequent state of the machine tool after the third vibration signal;
inputting the third vibration signal and the subsequent state into a bidirectional long short-term memory (BiLSTM) model, so that the BiLSTM model successively performs steps of: determining a time-domain feature of the third vibration signal; obtaining a forward hidden state through a recurrent temporal layer based on the time-domain feature of the third vibration signal; obtaining a backward hidden state through a reverse recurrent temporal layer based on a time-domain feature of the third vibration signal; concatenating the forward hidden state and the backward hidden state, to obtain a hidden layer state; determining the predicted state of the CNC machine tool based on the hidden layer state; determining a loss function value based on a difference between the predicted state and the subsequent state; and adjusting a model parameter of the BiLSTM model, so that the loss function value is less than a predetermined threshold; and
determining the adjusted BiLSTM model as the trained state prediction model corresponding to the life cycle stage.

7. The method according to claim 6, comprising:
recording a real state corresponding to the predicted state after the state prediction model outputs the predicted state of the CNC machine tool;
determining a difference between the predicted state and the real state; and
updating the trained state prediction model based on the difference.

8. A state prediction apparatus for a CNC machine tool, comprising:
an obtaining module (601), configured to obtain a first vibration signal of a CNC machine tool in an operation process;
a determining module (602), configured to determine a life cycle stage of the operation process in a full life cycle of the CNC machine tool based on the first vibration signal; and
an input module (603), configured to input the first vibration signal into a trained state prediction model corresponding to the life cycle stage, so that the state prediction model outputs a predicted state of the CNC machine tool.

9. The apparatus according to claim 8, wherein
the determining module (602) is configured to input the first vibration signal into a trained life cycle stage classification model, so that the life cycle stage classification model outputs the life cycle stage; and a training process of the life cycle stage classification model comprises: obtaining a second vibration signal from a test CNC machine tool of a same model as the CNC machine tool in the full life cycle; determining a time-domain feature of the second vibration signal; determining a normal period, a degradation period, and a failure period in the full life cycle based on the time-domain feature of the second vibration signal; attaching a first label to the time-domain feature in the normal period, attaching a second label to the time-domain feature in the degradation period, and attaching a third label to the time-domain feature in the failure period; and training a neural network model as the life cycle stage classification model based on the first label, the second label, and the third label.

10. The apparatus according to claim 9, wherein the time-domain feature is a root-mean-square value; and
the determining module (602) is configured to: determine, as the normal period, a time segment in which the root-mean-square value is less than or equal to a first predetermined threshold; determine, as the degradation period, a time segment in which the root-mean-square value is greater than the first predetermined threshold and less than or equal to a second predetermined threshold; and determine, as the failure period, a time segment in which the root-mean-square value is greater than the second predetermined threshold, wherein the second predetermined threshold is greater than the first predetermined threshold.

11. The apparatus according to claim 8, comprising:
a training module (604), configured to perform a training process corresponding to the state prediction model of the life cycle stage, wherein the training process comprises: obtaining a third vibration signal of a test CNC machine tool of a same model as the CNC machine tool in the life cycle stage and a subsequent state of the machine tool after the third vibration signal; and inputting the third vibration signal and the subsequent state into a BiLSTM model, so that the BiLSTM model successively performs steps of: determining a time-domain feature of the third vibration signal; obtaining a forward hidden state through a recurrent temporal layer based on the time-domain feature of the third vibration signal; obtaining a backward hidden state through a reverse recurrent temporal layer based on a time-domain feature of the third vibration signal; concatenating the forward hidden state and the backward hidden state, to obtain a hidden layer state; determining the predicted state of the CNC machine tool based on the hidden layer state; determining a loss function value based on a difference between the predicted state and the subsequent state; adjusting a model parameter of the BiLSTM model, so that the loss function value is less than a predetermined threshold; and determining the adjusted BiLSTM model as the trained state prediction model corresponding to the life cycle stage.

12. An electronic device, comprising:
a processor (701); and
a memory (702), configured to store executable instructions of the processor (701), wherein
the processor (701) is configured to read the executable instructions from the memory (702), and execute the executable instructions to implement the state prediction method for a CNC machine tool according to any one of claims 1 to 7.

13. A computer-readable storage medium, storing computer instructions, wherein the computer instructions, when executed by a processor, implement the state prediction method for a CNC machine tool according to any one of claims 1 to 7.

14. A computer program product, comprising a computer program, wherein the computer program, when executed by a processor, implements the state prediction method for a CNC machine tool according to any one of claims 1 to 7.
